# EUROPÄISCHE PATENTSCHRIFT

(11) **EP 3 233 544 B1**
(45) Veröffentlichungstag und Bekanntmachung des Hinweises auf die Patenterteilung: **20.11.2019**
(21) Anmeldenummer: 15813335.5
(22) Anmeldetag: 15.12.2015
(51) Int. Cl.: B60G 15/06, B60G 17/027, B60G 17/056

(54) **KRAFTFAHRZEUG-FAHRGESTELL**
MOTOR VEHICLE CHASSIS
CHÂSSIS DE VÉHICULE AUTOMOBILE

(30) Priorität: 19.12.2014 DE 102014018788
(43) Veröffentlichungstag der Anmeldung: 25.10.2017
(73) Patentinhaber: Hoerbiger Automotive Komfortsysteme GmbH, 86956 Schongau (DE)
(72) Erfinder: STOLLE, Klaus, 86972 Altenstadt (DE)
(74) Vertreter: Grättinger Möhring von Poschinger Patentanwälte Partnerschaft mbB
(86) Internationale Anmeldenummer: PCT/EP2015/079766
(87) Internationale Veröffentlichungsnummer: WO 2016/096837

(56) Entgegenhaltungen:
- EP-A2- 1 101 692
- WO-A1-2014/142160
- JP-A- H0 281 786
- US-A1- 2010 072 760

## Beschreibung

Die vorliegende Erfindung betrifft ein Kraftfahrzeug-Fahrgestell, umfassend eine Basisstruktur und eine Mehrzahl von mit dieser über jeweils eine Radaufhängung verbundenen Rädern, wobei jede Radaufhängung mindestens eine Feder aufweist und wobei ferner mindestens einer Radaufhängung eine hydraulische Niveau-Verstelleinrichtung zugeordnet ist.

Es ist bekannt, Kraftfahrzeuge mit einer Niveau-Verstelleinrichtung auszustatten, beispielsweise um bei Bedarf die Bodenfreiheit zu erhöhen. Typischerweise, wenngleich nicht zwingend, greift dabei die Verstelleinrichtung in einen der Fußpunkte der Feder der betreffenden Radaufhängung ein und verändert diesen, wobei prinzipiell nicht entscheidend ist, ob der der Basisstruktur oder aber der dem betreffenden Rad zugeordnete Federfußpunkt verstellt wird. Neben pneumatischen und elektrischen Federfußpunkt-Verstellantrieben (vgl. z.B. DE 102007051971 B4) sind insbesondere auch hydraulische Federfußpunkt-Verstellantriebe bekannt, beispielsweise aus der DE 3223195 A1, der DE 102009047100 A1, der US 5181696 A, der EP 2301773 A1, der JP 2010-149550 A und der WO 2014/142160 A1 (entsprechend EP 2851277 A1). Und auch die JP H02 81786 A offenbart einen hydraulischen Federfußpunkt-Verstellantrieb.

Verschiedene der hydraulischen Niveau-Verstellsysteme bauen auf dem (durchaus sinnvollen) Ansatz auf, dass nur das Anheben der Basisstruktur des Fahrzeugs aktiv, d.h. durch hydraulische Energie erfolgt, wohingegen zum Absenken der Bodenstruktur das Eigengewicht des Fahrzeugs genutzt wird, um die Hydraulikflüssigkeit aus dem Arbeitsraum eines (dementsprechend nur einfach wirkend ausgeführten) Linearaktors - über eine geöffnete Rückströmleitung - in den Vorratsbehälter zurück zu drücken. Dies gilt namentlich für das System nach der JP H02 81786 A, ebenso für das System nach der WO 2014/142160 A1. Nach der JP H02 81786 A ist eine reversierbare Hydraulikpumpe vorgesehen, deren beide Anschlüsse über einerseits jeweils ein - mit Durchflussrichtung zur Pumpe angeordnetes - Rückschlagventil und andererseits jeweils ein - mit Durchflussrichtung zum Tank - Überdruckventil mit dem Tank kommunizieren. Einer der beiden Pumpenausgänge steht über zwei hydraulisch entsperrbare Rückschlagventile mit vier einfach wirkenden hydraulischen Linearaktuatoren in Verbindung, wobei die Steuereingänge der beiden entsperrbaren Rückschlagventile über eine Steuerleitung von dem zweiten Pumpenausgang beaufschlagt werden.

Gemäß der WO 2014/142160 A1, welche ein insoweit besonders weit ausgearbeitetes Kraftfahrzeug-Fahrgestell der eingangs angegebenen Art offenbart, umfasst die hydraulische Niveau-Verstelleinrichtung einen einfach wirkenden hydraulischen Linearaktor, dessen (zum Anheben der Basisstruktur beaufschlagbarer) Arbeitsraum über eine Leitungs- und Ventilanordnung mit einem (ersten) Pumpenanschluss der Pumpe eines Hydraulikaggregats verbunden ist. Zwischen dem Hydraulikaggregat und dem Linearaktor ist dabei, um die Basisstruktur des Kraftfahrzeug ohne Energieverbrauch zuverlässig in ihrer angehobenen Stellung zu halten, ein Sperrventil angehobenen Stellung zu halten, ein Sperrventil vorgesehen, welches einen mittels einer Schließfeder in eine Sperrstellung des Ventils vorgespannten Ventilkolber aufweist. Durch Beaufschlagung eines ihm zugeordneten Ventil-Arbeitsraumes lässt sich der Ventilkolben gegen die Kraft der Schließfeder verschieben und das Sperrventil auf diese Weise öffnen, um die Hydraulikflüssigkeit aus dem Linearaktor abzulassen und die Basisstruktur des Fahrgestells auf diese Weise abzusenken. Das Hydraulikaggregat ist reversierbar, so dass zwischen zwei Förderrichtungen umgeschaltet werden kann. Die Leitungs- und Ventilanordnung verbindet den zweiten Pumpenanschluss mit dem Ventil-Arbeitsraum des Sperrventils und umfasst darüber hinaus ein die beiden Pumpenanschlüsse untereinander verbindendes 3/3-Wegeventil, dessen dritter Anschluss mit dem Vorratsbehälter verbunden ist. Das 3/3-Wegeventil ist federbelastet in eine Sperrstellung vorgespannt, aus der heraus es steuerdruckabhängig betätigt entweder den ersten oder den zweiten Pumpenanschluss an dem Vorratsbehälter anschließt.

In der Praxis liefert das in der WO 2014/142160 A1 offenbarte, mit einer hydraulischen Niveau-Verstelleinrichtung ausgestattete Kraftfahrzeug-Fahrgestell - trotz des erheblichen apparativen Aufwands - allerdings unbefriedigende Ergebnisse. Beispielsweise ist eine nur teilweise Absenkung des Fahrgestells aus seiner angehobenen Stellung heraus nicht bzw. nur auf aufwendige Weise möglich; denn wird, um die Rückströmung der Hydraulikflüssigkeit aus dem Arbeitsraum des Linearaktors in den Vorratsbehälter durch das hydraulisch geöffnete Sperrventil zu ermöglichen, der Kolben des Sperrventils - durch Beaufschlagung des betreffenden Arbeitsraumes des Sperrventils bei umgekehrter Förderrichtung der Pumpe - gegen die Kraft der Zuhaltefeder verschoben, so bleibt das Sperrventil so lange geöffnet, bis die Förderrichtung der Pumpe erneut geändert wird, d.h. bis die Pumpe wieder mit ihrer ersten Förderrichtung betrieben wird und - bei gleichzeitigem Beaufschlagen des Arbeitsraumes des Linearaktors und hierdurch Anheben der Basisstruktur des Fahrgestells - das zwischen den zweiten Pumpenausgang und den Ventil-Arbeitsraum des Sperrventils geschaltete entsperrbare Rückschlagventil öffnet.

Im Lichte der vorstehend aufgezeigten Nachteile des Standes der Technik ist die vorliegende Erfindung darauf gerichtet, ein Kraftfahrzeug-Fahrgestell der eingangs angegebenen Art bereitzustellen, dass sich durch eine gesteigerte Praxistauglichkeit auszeichnet, und zwar bei gleichzeitiger Verringerung des apparativen Aufwands gegenüber dem Stand der Technik.

Gelöst wir die vorstehend dargelegte Aufgabenstellung gemäß der vorliegenden Erfindung durch das in Anspruch 1 angegebene Kraftfahrzeug-Fahrgestell. Demnach zeichnet sich das erfindungsgemäße Kraftfahrzeug-Fahrgestell mit hydraulischer Niveau-Verstelleinrichtung durch die folgenden, in synergetischer Weise funktional zusammenwirkenden Merkmale aus: Die hydraulische Niveau-Verstelleinrichtung ist vollständig an der Radaufhängung angeordnet und umfasst einen Vorratsbehälter für Hydraulikflüssigkeit, ein Hydraulikaggregat mit einer durch einen Elektromotor angetriebenen, zwei Pumpenanschlüsse aufweisende Hydraulikpumpe, einen einfach wirkenden hydraulischen Linearaktor sowie eine den Vorratsbehälter, die Hydraulikpumpe und den Linearaktor miteinander verbindende Leitungs- und Ventilanordnung. Für das Anheben der Basisstruktur ist der Arbeitsraum des Linearaktors durch die Hydraulikpumpe beaufschlagbar, zu welchem Zweck ein erster Pumpenanschluss über eine Befüllleitung mit einem darin angeordneten Befüll-Rückschlagventil mit dem Arbeitsraum des hydraulischen Linearaktors verbunden ist. Das Hydraulikaggregat ist reversierbar mit einer zwischen den beiden Pumpenanschlüssen umkehrbaren Förderrichtung. Die beiden Pumpenanschlüsse sind über ein Wechselventil mit dem Vorratsbehälter verbunden. Das Wechselventil ist ohne eine durch Fremdenergie betätigte Ansteuerung autark ausgeführt und weist keine Sperrstellung auf, so dass ständig mindestens einer der beiden Pumpenanschlüsse über das Wechselventil mit dem Vorratsbehälter kommuniziert.

Der zweite Pumpenanschluss ist über eine Abströmleitung mit einer darin angeordneten Drosseleinheit mit dem Vorratsbehälter verbunden. Und eine Steuerleitung verbindet den Steueranschluss eines entsperrbaren Ablass-Rückschlagventils, welches in einer den Arbeitsraum des hydraulischen Linearaktors mit dem Vorratsbehälter verbindenden Ablassleitung angeordnet ist, mit der Abströmleitung zwischen dem zweiten Pumpenanschluss und der Drosseleinheit.

Neben dem Umstand, dass die bei dem erfindungsgemäßen Fahrgestell vorgesehene Niveau-Verstelleinrichtung ohne jegliches fremdgesteuerte, d.h. insbesondere ohne irgend ein elektrisch angesteuertes Ventil auskommen kann, besteht ein besonderes Charakteristikum des erfindungsgemäßen Fahrgestells darin, dass an den zweiten Pumpenanschluss eine reine Abströmleitung angeschlossen ist. Dies trägt in synergetischem Zusammenwirken mit den weiteren für dieses bestimmenden Merkmalen wesentlich zu der besonderen Brauchbarkeit des erfindungsgemäßen Fahrgestells bei. Anders, als dies für den Stand der Technik nach der WO 2014/142160 A1 gilt, fördert das Hydraulikaggregat bei seiner umgekehrten zweiten Förderrichtung nicht auf einen Hydraulikflüssigkeit aufnehmenden Verbraucher (wie einen Arbeitsraum oder dergleichen); vielmehr pumpt das Hydraulikaggregat bei dieser Betriebsweise die geförderte Hydraulikflüssigkeit durch die Abströmleitung - gegen den Widerstand der Strömungsdrossel - vollständig in den Vorratsbehälter zurück, abgesehen von der (minimalen) Menge an Hydraulikflüssigkeit, die beim Anlaufen der Hydraulikpumpe in ihrer zweiten Förderrichtung über die Steuerleitung auf den Steueranschluss des in der Ablassleitung angeordneten entsperrbaren Ablass-Rückschlagventils gegeben wird, um dieses zu öffnen, d.h. auf Durchgang zu schalten. Weiterhin ist für die vorliegende Erfindung bezeichnend, dass der zweite Pumpenanschluss in dem Sinne direkt auf den Steueranschluss des in der Ablassleitung angeordneten entsperrbaren Ablass-Rückschlagventils geschaltet ist, dass der am zweiten Pumpenanschluss herrschende Hydraulikdruck ständig an dem Steueranschluss des entsperrbaren Ablass-Rückschlagventils anliegt. Hierdurch lassen sich die vorstehend im Hinblick auf das Fahrgestell nach der WO 2014/142160 A1 dargelegten Nachteile vermeiden; und insgesamt ergibt sich bei einem ausgesprochen geringen apparativen Aufwand eine zuverlässig arbeitende und optimal handhabbare Niveau-Verstelleinrichtung.

Im Sinne des weiter oben bereits erwähnten besonders vorteilhaften Aspekts, dass die bei dem erfindungsgemäßen Fahrgestell vorgesehene Niveau-Verstelleinrichtung ohne jegliches fremdgesteuerte, d.h. insbesondere ohne irgend ein elektrisch angesteuertes Ventil auskommen kann, ist das Wechselventil, über das die beiden Pumpenanschlüsse mit dem Vorratsbehälter verbunden sind, ohne eine durch Fremdenergie betätigte Ansteuerung autark ausgeführt. Insbesondere weist das somit allein durch die anliegenden Drücke gesteuerte Wechselventil, anders als das nach der WO 2014/142160 A1 vorgesehene 3/3-Wegeventil keine Sperrstellung auf, so dass ständig mindestens einer der beiden Pumpenschlüsse über das Wechselventil mit dem Vorratsbehälter kommuniziert.

Die baulichen Besonderheiten der bei erfindungsgemäßen Fahrgestellen vorgesehenen Niveau-Verstelleinrichtung, insbesondere die Möglichkeit einer besonders kompakten Ausführung mit nur minimale Abmessungen, machen die hydraulische Verstelleinrichtung in besonderer Weise geeignet für eine Integration in die jeweilige Radaufhängung. In diesem Sinne ist die jeweilige hydraulische Verstelleinrichtung vollständig an der betreffenden Radaufhängung angeordnet, was insbesondere mit einschließt, dass jeder mit einer hydraulischen Niveau-Verstelleinrichtung ausgestatteten Radaufhängung ein eigenes Hydraulikaggregat zugeordnet ist.

Eine erste bevorzugte Weiterbildung der Erfindung zeichnet sich dadurch aus, dass in der Ablassleitung eine Strömungsdrossel, d.h. eine gesondertes, von dem Drosselverhalten des entsperrbaren Ablass-Rückschlagventils unabhängiges Drosselelement angeordnet ist. Diese Strömungsdrossel, d.h. deren Drosselverhalten, ist bestimmend für die Dynamik des Absenkens des Fahrgestells, wenn die Hydraulikpumpe auf ihre zweite Förderrichtung geschaltet und das entsperrbare Ablass-Rückschlagventil hierdurch geöffnet wird. Auf diese Weise lässt sich das Absenken des Fahrgestells optimieren, ohne Rücksicht auf die Strömungssituation innerhalb des entsperrbaren Ablass-Rückschlagventils nehmen zu müssen, welches somit seinerseits auf seine Funktion, das Fahrgestell auf seinem jeweils eingestellten Niveau zu halten, optimiert werden kann.

Zwar ist es unter einer Mehrzahl von Gesichtspunkten günstig, wenn das entsperrbare Ablass-Rückschlagventil (gesteuert geöffnet) ausschließlich beim Absenken des Fahrgestells durchströmt wird; denn in diesem Falle ist, da die durch das geöffnete Ablass-Rückschlagventil abströmende Hydraulikflüssigkeit unmittelbar in den Vorratsbehälter abströmt, eine unter ungünstigen Umständen (z.B. Druckimpulse) nachteilige strömungstechnische Rückkopplung auf den ersten Pumpenanschluss und/oder das Wechselventil ausgeschlossen. Allerdings ist eine solche Bauweise keineswegs zwingend. Vielmehr ist, im Rahmen einer insbesondere im Hinblick auf den erforderlichen Bauraum und die Anzahl an Komponenten besonders bevorzugten Weiterbildung, durchaus auch möglich, dass eine hydraulische Arbeitsleitung sowohl einen Abschnitt der Befüllleitung als auch einen Abschnitt der Ablassleitung bildet, wobei ein in der hydraulischen Arbeitsleitung angeordnetes entsperrbares Rückschlagventil sowohl das Befüll-Rückschlagventil als auch das entsperrbare Ablass-Rückschlagventil bildet.

Bei der vorstehend dargelegten besonderen Ausführungsform der Erfindung ist - gemäß einer abermals bevorzugten Weiterbildung - das in der hydraulischen Arbeitsleitung angeordnete entsperrbare Rückschlagventil zweistufig mit zwei in Serie geschalteten Einzelventilen mit parallel geschalteten Steueranschlüssen ausgeführt. Eine auf diese Weise durch die besagte Ventilgruppe bereitgestellte Redundanz ermöglicht den Einsatz vergleichsweise kostengünstiger entsperrbarer Rückschlagventile, ohne das dies nachteilige Auswirkungen auf die Zuverlässigkeit der Niveau-Verstelleinrichtung als ganzes hätte.

Anstatt der vorstehend beschriebenen Ventilgruppe mit zwei in Serie geschalteten entsperrbaren Rückschlagventilen mit parallel geschalteten Steueranschlüssen kann, gemäß einer wiederum anderen bevorzugten Weiterbildung eine (in der hydraulischen Arbeitsleitung angeordnete, d.h. wiederum sowohl beim Anheben als auch beim Absenken durchströmte) Ventilgruppe mit einem entsperrbaren Rückschlagventil und einem in Serie hierzu geschalteten Drossel-Rückschlagventil vorgesehen sein. Das Drosselrückschlagventil übernimmt dabei die Funktion der weiter oben bereits erwähnten, in der Ablassleitung angeordneten Strömungsdrossel.

Bevorzugt umfasst die Leitungs- und Ventilanordnung eine Notablassleitung, die den Arbeitsraum des hydraulischen Linearaktors mit der Abströmleitung verbindet und in die ein manuell betätigbares Sperrventil geschaltet ist. Durch manuelles Öffnen des besagten Sperrventils kann beim Ausfall des Hydraulikaggregats oder einer sonstigen Funktionsstörung das Fahrgestell abgesenkt werden, indem in dem Arbeitsraum des hydraulischen Linearaktors eingesperrte Hydraulikflüssigkeit über die Abströmleitung in den Vorratsbehälter abgelassen wird. Bevorzugt mündet die Notablassleitung dabei in die Abströmleitung stromaufwärts der darin angeordneten Drosseleinheit.

Die in der Abströmleitung angeordnete Drosseleinheit umfasst gemäß einer abermals besonders bevorzugten Weiterbildung eine Blende. Hierdurch ist - über die Blende - bei ruhendem System ein Druckausgleich zwischen dem Steueranschluss des entsperrbaren Ablass-Rückschlagventils und dem Vorrastbehälter sichergestellt. Allerdings kann die Drosseleinheit auch statt der Blende (oder ggf. zusätzlich zu dieser) ein Druckbegrenzungsventil umfassen.

Im Folgenden wird die vorliegende Erfindung anhand mehrerer in der Zeichnung veranschaulichter bevorzugter Ausführungsbeispiele näher erläutert. Dabei zeigt
- Fig. 1: teilweise schematisch ein Kraftfahrzeug, dessen Fahrgestell mit einer hydraulischen Niveau-Verstelleinrichtung ausgestattet ist, gemäß einer ersten bevorzugten Ausführungsform der vorliegenden Erfindung,
- Fig. 2: eine zweite bevorzugte Ausführungsform einer hydraulischen Niveau-Verstelleinrichtung eines nach der vorliegenden Erfindung ausgeführten Kraftfahrzeug-Fahrgestells,
- Fig. 3: eine dritte bevorzugte Ausführungsform einer hydraulischen Niveau-Verstelleinrichtung eines nach der vorliegenden Erfindung ausgeführten Kraftfahrzeug-Fahrgestells,
- Fig. 4: eine vierte bevorzugte Ausführungsform einer hydraulischen Niveau-Verstelleinrichtung eines nach der vorliegenden Erfindung ausgeführten Kraftfahrzeug-Fahrgestells,
- Fig. 5: eine fünfte bevorzugte Ausführungsform einer hydraulischen Niveau-Verstelleinrichtung eines nach der vorliegenden Erfindung ausgeführten Kraftfahrzeug-Fahrgestells und
- Fig. 6: eine sechste bevorzugte Ausführungsform einer hydraulischen Niveau-Verstelleinrichtung eines nach der vorliegenden Erfindung ausgeführten Kraftfahrzeug-Fahrgestells.

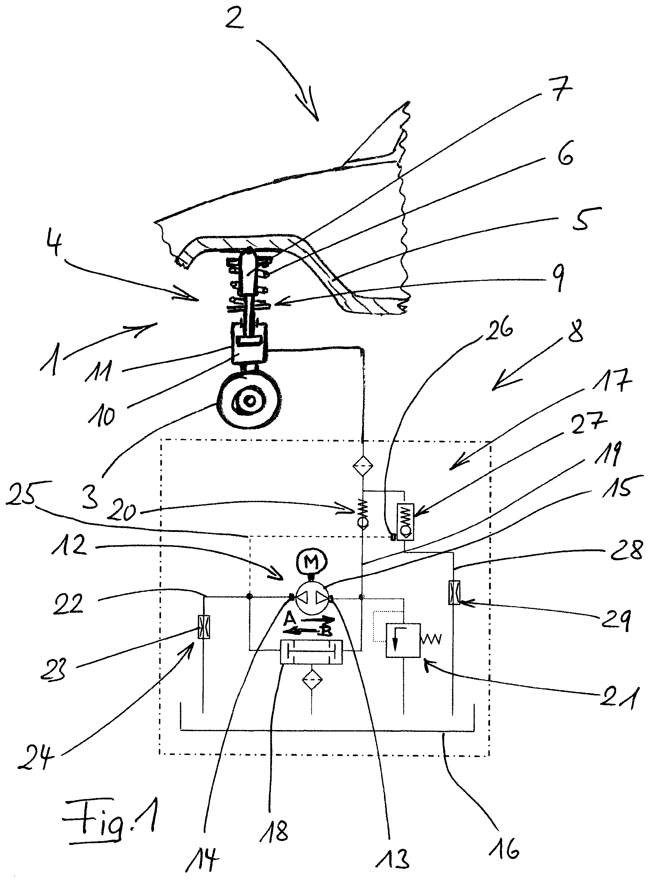

Nach Fig. 1 weist - in Ansehung des insoweit bestehenden Standes der Technik (s.o.) nur schematisch veranschaulicht - das Fahrgestell 1 eines Kraftfahrzeugs 2 mehrere Räder 3 auf, welche jeweils über eine Radaufhängung 4 mit einer Basisstruktur 5 verbunden sind. Die Radaufhängung 4 umfasst dabei jeweils eine Feder 6 und sonstige übliche Komponenten wie beispielsweise einen Stoßdämpfer 7.

Die in Fig. 1 im Detail gezeigte hydraulische Niveau-Verstelleinrichtung 8, welche insbesondere für eine bauliche Integration in die Radaufhängung 4 bestimmt ist, umfasst einen - in als solches bekannter Weise die Veränderung des (beispielsweise radseitigen) Fußpunktes 9 der Feder 6 der Radaufhängung 4 bewirkenden - einfach wirkenden, einen Arbeitsraum 10 aufweisenden hydraulischen Linearaktor 11, ein reversierbares Hydraulikaggregat 12 mit einer durch einen Elektromotor M angetriebenen, einen ersten Pumpenanschluss 13 und einen zweiten Pumpenanschluss 14 aufweisende Hydraulikpumpe 15, einen Vorratsbehälter 16 für Hydraulikflüssigkeit sowie eine den Vorratsbehälter 16, die Hydraulikpumpe 15 und den Linearaktor 11 miteinander verbindende Leitungs- und Ventilanordnung 17. Der erste Pumpenanschluss 13 und der zweite Pumpenanschluss 14 sind über ein Wechselventil 18 mit dem Vorratsbehälter 16 verbunden. Das Wechselventil 18 ist dabei autark ausgeführt; im Falle einer zwischen den beiden Pumpenanschlüssen 13, 14 bestehenden Druckdifferenz kommuniziert der Pumpenschluss mit geringerem Druckniveau über das Wechselventil 18 mit dem Vorratsbehälter 16, wohingegen der Pumpenschluss mit höheren Druckniveau zum Vorratsbehälter 16 hin gesperrt ist.

Für das Anheben der Basisstruktur 5 des Fahrgestells 1 ist der Arbeitsraum 10 des Linearaktors 11 durch die (mit der ersten Förderrichtung A betriebenen) Hydraulikpumpe 15 beaufschlagbar. Hierzu ist der erste Pumpenanschluss 13 über eine Befüllleitung 19 mit dem Arbeitsraum 10 des hydraulischen Linearaktors 11 verbunden. Und die Hydraulikpumpe 15 saugt Hydraulikflüssigkeit über den zweiten Pumpenanschluss 14 und das Wechselventil 18 aus dem Vorratsbehälter 16 an. In der Befüllleitung 19 ist ein Befüll-Rückschlagventil 20 angeordnet. Dieses verhindert eine umgekehrte Durchströmung der Befüllleitung 19. Weiterhin ist ein Druckbegrenzungsventil 21 vorgesehen, welches einen unzulässig hohen Druckanstieg in der Befüllleitung 19 verhindert, indem es bei Überschreiten eines vorgegebenen Druckniveaus eine Verbindung des ersten Pumpenanschlusses 13 zum Vorratsbehälter 16 öffnet.

Ist das gewünschte Niveau des Fahrgestells 1 erreicht, stoppt die Hydraulikpumpe 15. Die in den Arbeitsraum 10 des Linearaktors 11 gepumpte Hydraulikflüssigkeit bleibt dort eingesperrt.

Zum Absenken des Fahrgestells 1 wird die Hydraulikpumpe 15 mit umgekehrter, zweiter Förderrichtung B betrieben. Das Wechselventil 18 steuert um. Die Hydraulikpumpe 15 saugt nun Hydraulikflüssigkeit über den ersten Pumpenanschluss 13 und das Wechselventil 18 aus dem Vorratsbehälter 16 an und fördert diese über den zweiten Pumpenanschluss 14 und eine Abströmleitung 22 mit einer darin angeordneten, durch eine Blende 23 gebildeten Drosseleinheit 24 in den Vorratsbehälter 16 zurück. Der in der Abströmleitung 22 stromaufwärts der Blende 23 bestehende Staudruck wird über eine Steuerleitung 25, welche die Abströmleitung 22 mit dem Steueranschluss 26 eines entsperrbaren Ablass-Rückschlagventils 27 verbindet, auf den Steueranschluss 26 des entsperrbaren Ablass-Rückschlagventils 27 geschaltet. Das entsperrbare Ablass-Rückschlagventil 27 öffnet. Und die in dem Arbeitsraum 10 des hydraulischen Linearaktors 11 befindliche Hydraulikflüssigkeit wird - unter dem Gewicht des Kraftfahrzeugs 2 - über die Ablassleitung 28, welche den Arbeitsraum 10 des hydraulischen Linearaktors 11 mit dem Vorratsbehälter 16 verbindet und in der das entsperrbare Ablass-Rückschlagventil 27 angeordnet ist, in den Vorratsbehälter 16 verdrängt. Die Rückströmung durch die Ablassleitung 28 - und somit die Absenkgeschwindigkeit des Fahrgestells 1 - wird dabei durch eine in der Ablassleitung 28 angeordnete Strömungsdrossel 29 begrenzt.

Ist das erwünschte Niveau erreicht, stoppt die Hydraulikpumpe 15. Das Ablass-Rückschlagventil 27 schließt. Und die in den Arbeitsraum 10 des Linearaktors 11 verbliebene Hydraulikflüssigkeit bleibt dort eingesperrt. Aus dieser Stellung kann das Fahrgestell 1 auf die vorstehend beschriebene Weise bei Bedarf weiter abgesenkt oder wieder angehoben werden.

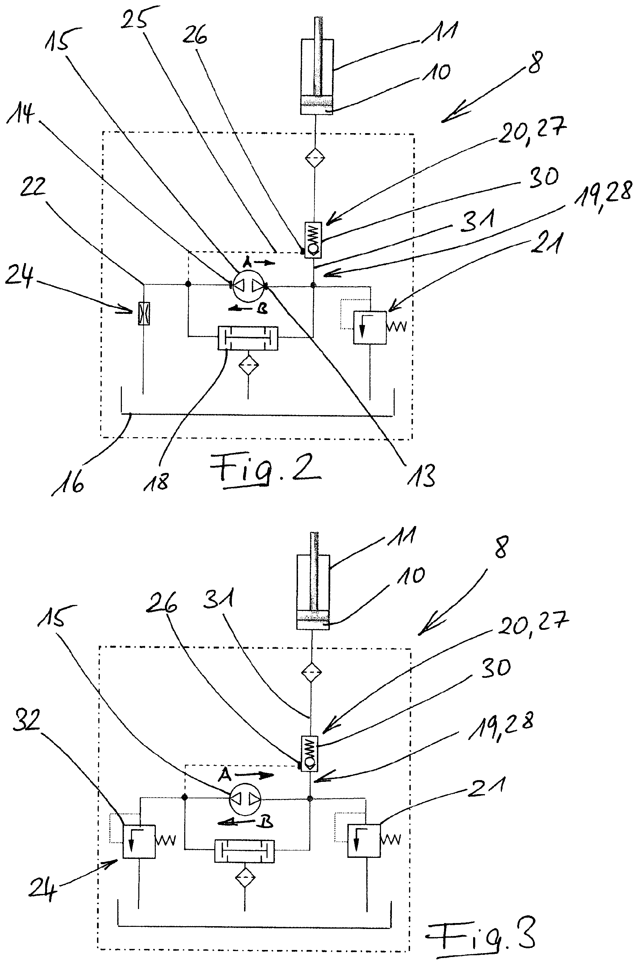

Fig. 2 veranschaulicht eine Abwandlung der in Fig. 1 gezeigten hydraulischen Niveau-Verstelleinrichtung 8 eines Kraftfahrzeug-Fahrgestells 1 dergestalt, dass zwei nach Fig. 1 baulich getrennte Ventile, nämlich das Befüll-Rückschlagventil 20 und das entsperrbare Ablass-Rückschlagventil 27 zu einem einzigen, beide Funktionen in sich vereinigenden entsperrbaren Rückschlagventil 30 zusammengefasst sind. Das entsprechende entsperrbare Rückschlagventil 30 ist dabei in einer hydraulischen Arbeitsleitung 31 angeordnet, die sowohl einen Abschnitt der Befüllleitung 19 als auch einen Abschnitt der Ablassleitung 28 bildet. Die Funktion der in Fig. 2 gezeigten hydraulischen Niveau-Verstelleinrichtung 8 stimmt mit der der hydraulischen Niveau-Verstelleinrichtung 8 nach Fig. 1 überein mit der Maßgabe, dass beim Absenken des Fahrgestells 1 (bei geöffnetem Rückschlagventil 30) die Hydraulikflüssigkeit aus dem Arbeitsraum 10 des Linearaktors 11 über die hydraulischen Arbeitsleitung 31 und das Wechselventil 18 in den Vorratsbehälter 16 verdrängt wird. Ein Teil der aus dem Arbeitsraum 10 des Linearaktors 11 verdrängten Hydraulikflüssigkeit wird dabei von der Hydraulikpumpe 15 über deren ersten Pumpenanschluss 13 angesaugt und über die Abströmleitung 22 in den Vorratsbehälter 16 gefördert.

Die in Fig. 3 gezeigte dritte Ausführungsform der hydraulischen Niveau-Verstelleinrichtung 8 eines Kraftfahrzeug-Fahrgestells 1 entspricht weitgehend derjenigen nach Fig. 2. Hier ist allerdings die Drosseleinheit 24 statt durch eine Blende durch ein Druckbegrenzungsventil 32 realisiert.

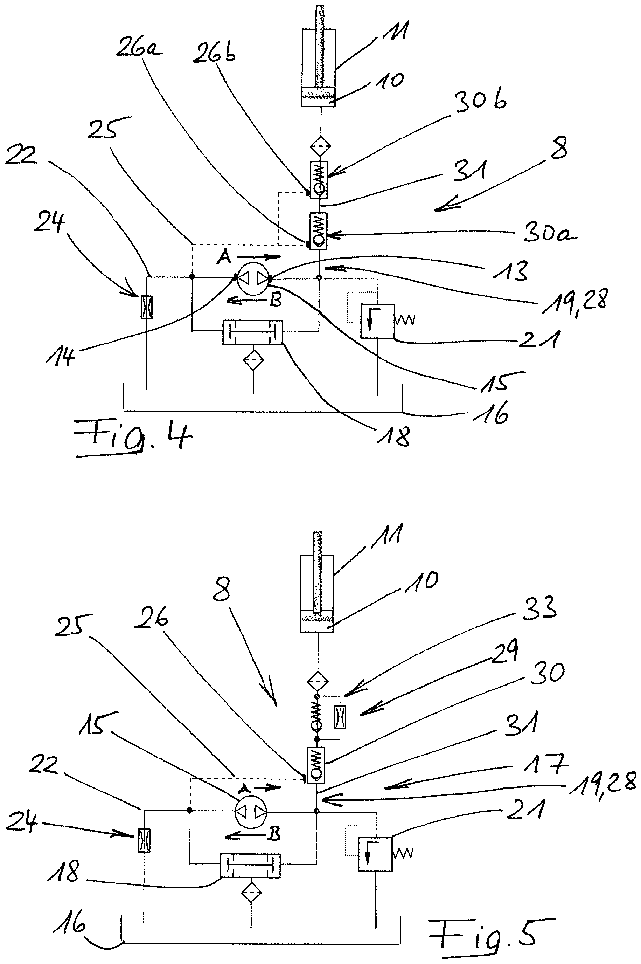

Die in Fig. 4 gezeigte vierte Ausführungsform der hydraulischen Niveau-Verstelleinrichtung 8 eines Kraftfahrzeug-Fahrgestells 1 entspricht ebenfalls weitgehend derjenigen nach Fig. 2. Hier ist allerdings das in der hydraulischen Arbeitsleitung 31 angeordnete entsperrbare Rückschlagventil 30 zweistufig mit zwei in Serie geschalteten Einzelventilen 30a, 30b mit parallel geschalteten Steueranschlüssen 26a, 26b ausgeführt.

Die in Fig. 5 gezeigte fünfte Ausführungsform der hydraulischen Niveau-Verstelleinrichtung 8 eines Kraftfahrzeug-Fahrgestells 1 entspricht ebenfalls weitgehend derjenigen nach Fig. 2. Hier ist allerdings in der hydraulischen Arbeitsleitung 31, in Serie zu dem dort angeordneten entsperrbaren Rückschlagventil 30 geschaltet, ein Drossel-Rückschlagventil 33 vorgesehen. Dieses erlaubt ein ungedrosseltes Befüllen des Arbeitsraumes 10 des Linearaktors 11 beim Anheben des Kraftfahrzeug-Fahrgestells 1 (Förderrichtung A der Hydraulikpumpe 15), wohingegen beim Absenken des Fahrgestells 1 (Förderrichtung B der Hydraulikpumpe 15) die Rückströmung der Hydraulikflüssigkeit aus dem Arbeitsraum 10 des Linearaktors 11 in den Vorratsbehälter 16 gedrosselt ist. Das Drosselrückschlagventil 33 übernimmt insoweit die Funktion der Strömungsdrossel 29 der in Fig. 1 gezeigten hydraulischen Niveau-Verstelleinrichtung 8.

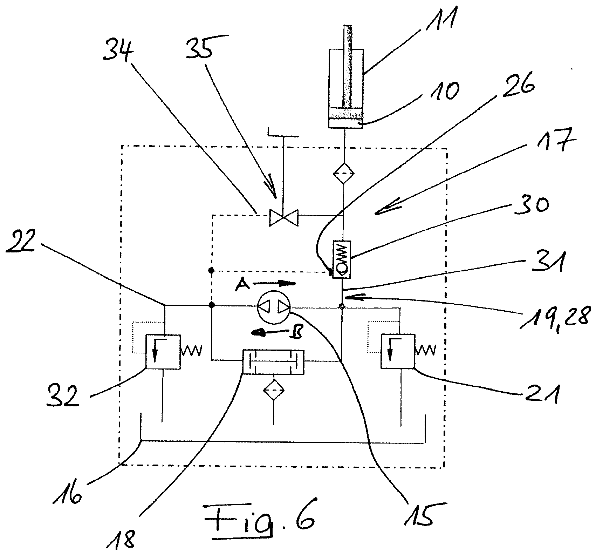

Die in Fig. 6 gezeigte sechste Ausführungsform der hydraulischen Niveau-Verstelleinrichtung 8 eines Kraftfahrzeug-Fahrgestells 1 entspricht weitgehend derjenigen nach Fig. 3. Hier umfasst allerdings die Leitungs- und Ventilanordnung 17 eine Notablassleitung 34, die den Arbeitsraum 10 des hydraulischen Linearaktors 11 mit der Abströmleitung 22 verbindet und in die ein manuell betätigbares Sperrventil 35 geschaltet ist.

## Patentansprüche

1. Kraftfahrzeug-Fahrgestell (1), umfassend eine Basisstruktur (5) und eine Mehrzahl von mit dieser über jeweils eine Radaufhängung (4) verbundenen Rädern (3), wobei jede Radaufhängung (4) mindestens eine Feder (6) aufweist und wobei ferner mindestens einer Radaufhängung (4) eine hydraulische Niveau-Verstelleinrichtung (8) zugeordnet ist, mit den folgenden Merkmalen:
- die hydraulische Niveau-Verstelleinrichtung (8) ist vollständig an der Radaufhängung (4) angeordnet;
- sie umfasst einen Vorratsbehälter (16) für Hydraulikflüssigkeit, ein Hydraulikaggregat (12) mit einer durch einen Elektromotor (M) angetriebenen, zwei Pumpenanschlüsse (13, 14) aufweisende Hydraulikpumpe (15), einen einfach wirkenden hydraulischen Linearaktor (11) sowie eine den Vorratsbehälter (16), die Hydraulikpumpe (15) und den Linearaktor (11) miteinander verbindende Leitungs- und Ventilanordnung (17);
- für das Anheben der Basisstruktur (5) ist der Arbeitsraum (10) des Linearaktors (11) durch die Hydraulikpumpe (15) beaufschlagbar, zu welchem Zweck ein erster Pumpenanschluss (13) über eine Befüllleitung (19) mit einem darin angeordneten Befüll-Rückschlagventil (20) mit dem Arbeitsraum (10) des hydraulischen Linearaktors (11) verbunden ist;
- das Hydraulikaggregat (12) ist reversierbar mit einer zwischen den beiden Pumpenanschlüssen (13, 14) umkehrbaren Förderrichtung (A, B);
- die beiden Pumpenanschlüsse (13, 14) sind über ein Wechselventil (18) mit dem Vorratsbehälter (16) verbunden;
- das Wechselventil (18) ist ohne eine durch Fremdenergie betätigte Ansteuerung autark ausgeführt und weist keine Sperrstellung auf, so dass ständig mindestens einer der beiden Pumpenschlüsse (13, 14) über das Wechselventil (18) mit dem Vorratsbehälter (16) kommuniziert;
- der zweite Pumpenanschluss (14) ist über eine Abströmleitung (22) mit einer darin angeordneten Drosseleinheit (24) mit dem Vorratsbehälter (16) verbunden;
- eine Steuerleitung (25) verbindet den Steueranschluss (26) eines entsperrbaren Ablass-Rückschlagventils (27), welches in einer den Arbeitsraum (10) des hydraulischen Linearaktors (11) mit dem Vorratsbehälter (16) verbindenden Ablassleitung (28) angeordnet ist, mit der' Abströmleitung (22) zwischen dem zweiten Pumpenanschluss (14) und der Drosseleinheit (24).

2. Kraftfahrzeug-Fahrgestell nach Anspruch 1, **dadurch gekennzeichnet, dass** in der Ablassleitung (28) eine Strömungsdrossel (29) angeordnet ist.

3. Kraftfahrzeug-Fahrgestell nach Anspruch 1, **dadurch gekennzeichnet, dass** eine hydraulische Arbeitsleitung (31) sowohl einen Abschnitt der Befüllleitung (19) als auch einen Abschnitt der Ablassleitung (28) bildet, wobei ein in der hydraulischen Arbeitsleitung (31) angeordnetes entsperrbares Rückschlagventil (30) sowohl das Befüll-Rückschlagventil (20) als auch das entsperrbare Ablass-Rückschlagventil (27) bildet.

4. Kraftfahrzeug-Fahrgestell nach Anspruch 3, **dadurch gekennzeichnet, dass** das in der hydraulischen Arbeitsleitung (31) angeordnete entsperrbare Rückschlagventil (30) zweistufig mit zwei in Serie geschalteten Einzelventilen (30a, 30b) mit parallel geschalteten Steueranschlüssen (26a, 26b) ausgeführt ist.

5. Kraftfahrzeug-Fahrgestell nach Anspruch 3, **dadurch gekennzeichnet, dass** das in der hydraulischen Arbeitsleitung (31) angeordnete entsperrbare Rückschlagventil (30) in Serie geschaltet ist mit einem Drossel-Rückschlagventil (33).

6. Kraftfahrzeug-Fahrgestell nach einem der Ansprüche 1 bis 5, **dadurch gekennzeichnet, dass** die Leitungs- und Ventilanordnung (17) eine Notablassleitung (34) umfasst, die den Arbeitsraum (10) des hydraulischen Linearaktors (11) mit der Abströmleitung (22) verbindet und in die ein manuell betätigbares Sperrventil (35) geschaltet ist.

7. Kraftfahrzeug-Fahrgestell nach einem der Ansprüche 1 bis 6, **dadurch gekennzeichnet, dass** die Drosseleinheit (24) eine Blende (23) umfasst.

8. Kraftfahrzeug-Fahrgestell nach einem der Ansprüche 1 bis 7, **dadurch gekennzeichnet, dass** die Drosseleinheit (24) ein Druckbegrenzungsventil (32) umfasst.

## Claims

1. A motor vehicle chassis (1), comprising a base structure (5); and a multiplicity of wheels (3) connected therewith via respectively one wheel suspension (4), wherein each wheel suspension (4) has at least one spring (6) and wherein further a hydraulic level-adjusting device (8) is allocated at least to one wheel suspension (4), **characterized by** the following features:
- the hydraulic level-adjusting device (8) is disposed completely on the wheel suspension (4);
- the hydraulic level-adjusting device (8) comprises a reservoir (16) for hydraulic fluid, a hydraulic power pack (12) with a hydraulic pump (15) driven by an electric motor (M) and having two pump ports (13, 14), a single-acting hydraulic linear actuator (11) as well as a line and valve arrangement (17) placing the reservoir (16), the hydraulic pump (15) and the linear actuator (11) in communication with one another;
- for raising the base structure (5), the working space (10) of the linear actuator (11) can be pressurized by the hydraulic pump (15), for which purpose a first pump port (13), via a filling line (19) with a filling check valve (20) disposed therein, is in communication with the working space (10) of the hydraulic linear actuator (11);
- the hydraulic power pack (12) is reversible, with a reversible delivery direction (A, B) between the two pump ports (13, 14);
- the two pump ports (13, 14) are in communication with the reservoir (16) via a shuttle valve (18);
- the shuttle valve (18) is constructed to be self-sufficient, without any activation imposed by external energy, and does not have any shut-off position, and so at least one of the two pump ports (13, 14) is constantly in communication with the reservoir (16) via the shuttle valve (18);
- the second pump port (14) is in communication with the reservoir (16) via a discharge line (22) with a throttle unit (24) disposed therein;
- a control line (25) places the control port (26) of a pilot-to-open drainage check valve (27), which is disposed in a drainage line (28) placing the working space (10) of the hydraulic linear actuator (11) in communication with the reservoir (16), in communication with the discharge line (22) between the second pump port (14) and the throttle unit (24).

2. The motor-vehicle chassis of claim 1, **characterized in that** a flow throttle (29) is disposed in the drainage line (28).

3. The motor-vehicle chassis of claim 1, **characterized in that** a hydraulic working line (31) forms both a portion of the filling line (19) and a portion of the drainage line (28), in which case a pilot-to-open check valve (30) disposed in the hydraulic working line (31) forms both the filling check valve (20) and the pilot-to-open drainage check valve (27).

4. The motor-vehicle chassis of claim 3, **characterized in that** the pilot-to-open check valve (30) disposed in the hydraulic working line (31) is constructed in two stages, with two individual valves (30a, 30b) connected in series and having control ports (26a, 26b) connected in parallel.

5. The motor-vehicle chassis of claim 3, **characterized in that** the pilot-to-open check valve (30) disposed in the hydraulic working line (31) is connected in series with a throttle check valve (33).

6. The motor-vehicle chassis of one of the claims 1 to 5, **characterized in that** the line and valve arrangement (17) comprises an emergency drainage line (34), which places the working space (10) of the hydraulic linear actuator (11) in communication with the discharge line (22) and in which a manually actuatable shutoff valve (35) is connected.

7. The motor-vehicle chassis of one of the claims 1 to 6, **characterized in that** the throttle unit (24) comprises an orifice (23).

8. The motor-vehicle chassis of one of the claims 1 to 7, **characterized in that** the throttle unit (24) comprises a pressure-limiting valve (32).

## Revendications

1. Châssis de véhicule automobile (1), comprenant une structure de base (5) et une pluralité de roues (3) reliées à celle-ci par le biais respectivement d'une suspension des roues (4), sachant que chaque suspension des roues (4) comporte au minimum un ressort (6) et sachant qu'en outre au moins un système de réglage de niveau hydraulique (8) est attribué à une suspension des roues (4), avec les caractéristiques suivantes :
- le système de réglage de niveau hydraulique (8) est disposé entièrement sur la suspension des roues (4),
- elle comprend un réservoir de stockage (16) pour le liquide hydraulique, un groupe hydraulique (12) avec une pompe hydraulique (15) entraîné par un moteur électrique (M), comportant deux raccords de pompe (13, 14), un actionneur linéaire hydraulique agissant à simple effet (11) ainsi qu'un système à conduite et soupape (17) reliant le réservoir de stockage (16), le pompe hydraulique (15) et l'actionneur linéaire (11) entre eux,
- pour le soulèvement de la structure de base (5), l'espace de travail (10) de l'actionneur linéaire (11) peut être sollicité par la pompe hydraulique (15) but dans lequel un premier raccord de pompe (13) est relié à l'espace de travail (10) de l'actionneur linéaire hydraulique (11) par le biais d'une conduite de remplissage (19) avec un clapet antiretour de remplissage (20) disposé dedans,
- le groupe hydraulique (12) est réversible avec une direction de débit (A, B) réversible entre les deux raccords de pompe (13, 14),
- les deux raccords de pompe (13, 14) sont reliés par le biais d'une soupape à deux voies (18) au réservoir de stockage (16),
- la soupape à deux voies (18) est exécutée de façon autonome sans une commande actionnée par une énergie extérieure et ne comporte aucune position de blocage de telle sorte qu'au moins un des deux raccords de pompe (13, 14) communique en permanence avec le réservoir de stockage (16) par le biais de la soupape à deux voies (18),
- le deuxième raccord de pompe (14) est relié au réservoir de stockage (16) par le biais d'une conduite d'écoulement (22) avec une unité d'étranglement (24) disposée dedans,
- une conduite de commande (25) relie le raccord de commande (26) d'un clapet antiretour d'évacuation déverrouillable (27), lequel est disposé dans une conduite d'évacuation (28) reliant l'espace de travail (10) de l'actionneur linéaire hydraulique (11) au réservoir de stockage (16) avec la conduite d'écoulement (22) entre le deuxième raccord de pompe (14) et l'unité d'étranglement (24).

2. Châssis de véhicule automobile selon la revendication 1, **caractérisé en ce qu'**un papillon d'écoulement (29) est disposé dans la conduite d'évacuation (28).

3. Châssis de véhicule automobile selon la revendication 1, **caractérisé en ce qu'**une conduite de travail hydraulique (31) forme aussi bien une section de la conduite de remplissage (19) que une section de la conduite d'évacuation (28), sachant qu'un volet antiretour déverrouillable (30) disposé dans la conduite de travail hydraulique (31) forme aussi bien le clapet antiretour de remplissage (20) que le clapet antiretour d'évacuation déverrouillable (27).

4. Châssis de véhicule automobile selon la revendication 3, **caractérisé en ce que** le clapet antiretour (30) déverrouillable disposé dans la conduite de travail hydraulique (31) est exécuté biétagé avec deux soupapes individuelles (30a, 30b) montées en série avec des raccords de commande (26a, 26b) montés en parallèle.

5. Châssis de véhicule automobile selon la revendication 3, **caractérisé en ce que** le clapet antiretour (30) déverrouillable disposé dans la conduite de travail hydraulique (31) est monté en série avec un clapet antiretour d'étranglement (33).

6. Châssis de véhicule automobile selon l'une quelconque des revendications 1 à 5, **caractérisé en ce que** le système à conduite et soupape (17) comprend une conduite d'évacuation d'urgence (34), qui relie l'espace de travail (10) de l'actionneur linéaire hydraulique (11) à la conduite d'écoulement (22) et dans laquelle est montée une vanne d'arrêt (35) actionnable à la main.

7. Châssis de véhicule automobile selon l'une quelconque des revendications 1 à 6, **caractérisé en ce que** l'unité d'étranglement (24) comprend un obturateur (23).

8. Châssis de véhicule automobile selon l'une quelconque des revendications 1 à 7, **caractérisé en ce que** l'unité d'étranglement (24) comprend une soupape de limitation de pression (32).
